# EUROPÄISCHE PATENTSCHRIFT

(11) **EP 0 621 990 B1**
(45) Veröffentlichungstag und Bekanntmachung des Hinweises auf die Patenterteilung: **12.06.1996**
(21) Anmeldenummer: 93901593.9
(22) Anmeldetag: 18.12.1992
(51) Int. Cl.: H02J 7/04

(54) **VERFAHREN ZUM LADEN VON AKKUMULATOREN**
METHOD OF CHARGING ACCUMULATORS
PROCEDE POUR LA CHARGE D'ACCUMULATEURS

(30) Priorität: 14.01.1992 DE 4200693
(43) Veröffentlichungstag der Anmeldung: 02.11.1994
(73) Patentinhaber: ROBERT BOSCH GMBH, 70442 Stuttgart (DE)
(72) Erfinder: FIEBIG, Armin, D-7022 Leinfelden-Echterdingen (DE); HAERLE, Vinzenz, D-7449 Neckartenzlingen (DE)
(86) Internationale Anmeldenummer: DE9201060
(87) Internationale Veröffentlichungsnummer: WO9314548

(56) Entgegenhaltungen:
- WO-A-92/09130
- US-A- 4 308 493
- US-A- 4 370 606
- Control Engineering, Band 38, No. 9, Juli 1991, Nick Infelise, "A Clear Vision of Fuzzy Logic"

## Beschreibung

### Stand der Technik

Die Erfindung betrifft ein Verfahren zum Laden von Akkumulatoren nach der Gattung des Anspruchs 1, außerdem ein Ladegerät für Akkumulatoren gemäß Oberbegriff des Anspruchs 5.

In elektrischen Geräten werden zunehmend Batterien durch Wechselakkumulatoren ersetzt, beispielsweise in Elektrowerkzeugen. Die Akkumulatoren weisen einzelne in Reihe geschaltete Zellen auf, beispielsweise NiCad- aber auch NiH-Zellen auf. Zur Erfassung der Zellentemperatur werden geeignete Sensoren, beispielsweise NTC-Widerstände oder Dioden, zwischen die Zellen eingebracht. Beim Wiederaufladen der Akkumulatoren werden verschiedene Abschaltkriterien berücksichtigt, beispielsweise Temperatur-, Spannungs- oder Zeitabschaltung. Auch werden häufig mehrere Kriterien kombiniert. Beschädigungen der Zellen konnten auch dann noch vermieden werden, wenn bei Ladezeiten bis zu einer Stunde bei der Berücksichtigung eines der Abschaltkriteriums ein Fehler auftrat.

Aus der US 4,308,493 ist ein Ladegerät für Alkalibatterien bekannt, bei dem während des Ladens die Temperatur des Akkus gemessen wird. Mit steigender Temperatur steigt auch der Ladestrom und umgekehrt. Wird während des Ladens ein vorgegebener Spannungswert erreicht, wird der Ladestrom abgeschaltet.

Aus der US 4,370,606 ist ein Ladegerät bekannt, bei dem eine Referenzspannung für einen Thermistor gebildet wird. Die Referenzspannung ist von der Umgebungstemperatur und der Batterietemperatur abhängig. Mit Hilfe der Referenzspannung wird der Steuerungeingang eines Thyristors gesteuert, der den Ladestrom für die Batterie liefert. Der Ladestrom wird abgeschaltet, wenn die Spannungsdifferenz zwischen der Referenzspannung und der Ladespannung kleiner als die Schaltspannung des Thyristors ist.

### Vorteile der Erfindung

Das erfindungsgemäße Verfahren mit den in Anspruch 1 genannten Merkmalen, so wie die Vorrichtung gemäß Anspruch 5 haben demgegenüber den Vorteil, daß schonende Ladezyklen gewährleistet sind, die die Lebensdauer der Zellen verlängern, auch wenn die Ladezeit wesentlich verkürzt wird.

Durch den Einsatz der Fuzzy-Logik können vielfältige Randbedingungen berücksichtigt und ein sehr schonendes Ladeverfahren realisiert werden, ohne den Aufwand zur Realisierung des Verfahrens wesentlich zu erhöhen.

Nach dem erfindungsgemäßen Verfahren werden Spannung und Temperatur des Akkumulators beziehungsweise von dessen Zellen sowie die zeitliche Ableitung dieser Meßwerte erfaßt. Mit Hilfe relativ weniger Signale kann bereits ein sehr schonendes Ladeverfahren realisiert werden.

Bevorzugt wird außerdem eine Ausführungsform des Verfahrens, bei der verschiedene Ladevorgänge danach unterschieden werden können, ob die Temperatur des Akkumulators hoch oder niedrig oder ob die Temperatur des Akkumulators beziehungsweise der Zellen steigt oder fällt. Durch die Berücksichtigung dieser Meßwerte kann auf einfache Weise ein schonendens Laden des Akkumulators sichergestellt werden.

Weitere Ausführungsformen ergeben sich aus den übrigen Unteransprüchen.

Das Ladegerät zur Durchführung des Verfahrens zeichnet sich dadurch aus, daß ein Fuzzy-Prozessor vorgesehen ist. Durch den Einsatz eines derartigen Prozessors ist das Ladegerät besonders geeignet Akkumulatoren schonend aufzuladen damit die Lebensdauer der einzelnen Zellen zu verlängern.

Als besonders vorteilhaft hat sich der Einsatz des Verfahrens beziehungsweise des Ladegeräts beim Laden von NiCad- und/oder NiH-Akkumulatoren erwiesen.

### Zeichnung

Die Erfindung wird im folgenden Anhang der Zeichnung näher erläutert. Es zeigen:
- Figur 1: Ein Blockschaltbild eines Ladegeräts;
- Figur 2: Ein Diagramm zur Verdeutlichung der Durchführung des Verfahrens zum Laden von Akkumulatoren;
- Figur 3: Mitgliedschaftsfunktionen von Eingangsgrößen und
- Figur 4: Die Mitgliedschaftsfunktion einer Ausgangsgröße.

### Beschreibung der Ausführungsbeispiele

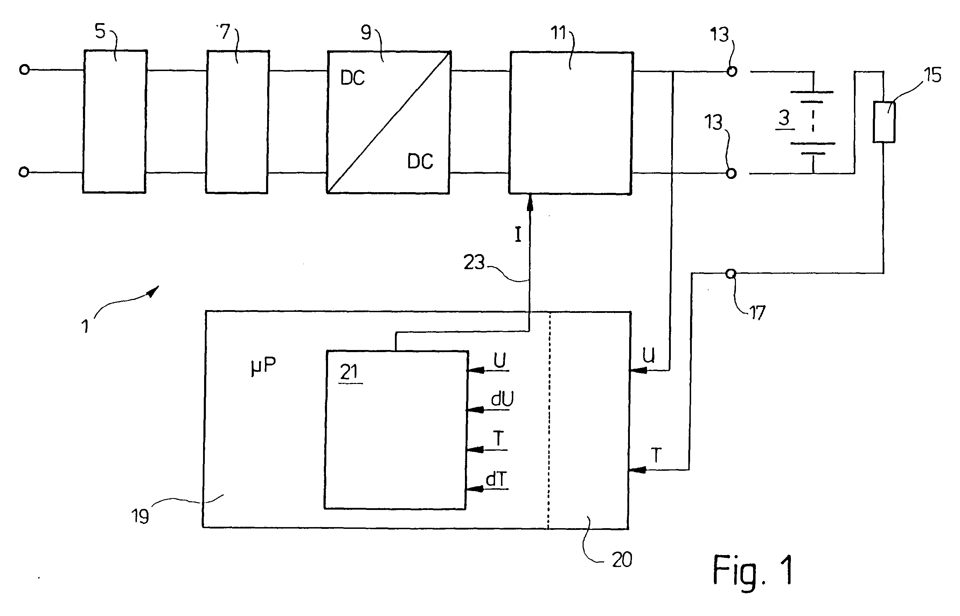

Figur 1 zeigt ein schematisches Blockschaltbild eines Ladegeräts 1 zum Landen eines Akkumulators 3. Das Ladegerät ist an eine geeignete Netzversorgung anschließbar. Die abgegriffene Spannung wird durch eine Filterschaltung 5 geglättet und einem Gleichrichter 7 zugeführt. Dessen Ausgangssignal wird über einen DC-Wandler 9 an einen Stromregler 11 weitergeleitet, an dessen Ausgangsklemmen 13 der Akkumulator 3 angeschlossen ist.

Der Akkumulator ist mit einem Temperatursensor versehen, der hier als NTC-Widerstand 15 ausgebildet ist und der hier beispielhaft mit seinem einen Ende an einem Anschluß des Akkumulators 3 angeschlossen ist. Der NTC-Widerstand 15 ist andererseits mit einer Eingangsklemme 17 des Ladegeräts 1 verbunden.

Das Ladegerät 1 weist einen Mikroprozessor 19 auf, der eine Fuzzy-LogiK 21 umfaßt. An diese werden als Eingangssignale die an dem zu ladenden Akkumulator 3 anliegende Spannung U, deren Ableitung nach der Zeit, bezeichnet als dU, die Temperatur T des Akkumulators so wie deren als dT bezeichnete Ableitung nach der Zeit.

Aus Figur 1 ist noch ersichtlich, daß der Mikroprozessor 19 mit einer Meßwertaufbereitungsstufe 20 versehen ist, in welcher die zeitliche Ableitung der Spannung dU/dt sowie die zeitliche Ableitung der Temperatur dT/dt erzeugt werden. überdies wird in der Signalaufbereitungsstufe 20 eine Glättung der Signale vorgenommen, um möglichst eine fehlerfreie Weiterverarbeitung zu gewährleisten.

Die Eingangssignale werden von der Logikschaltung ausgewertet und daraus der Ladestrom I berechnet, den der Stromregler 11 für den Ladevorgang des Akkumulators 3 vorgibt. Der Mikroprozessor 19, beziehungsweise dessen Fuzzy-Logik 21 sind daher über eine Steuerleitung 23 mit dem Stromregler 11 verbunden.

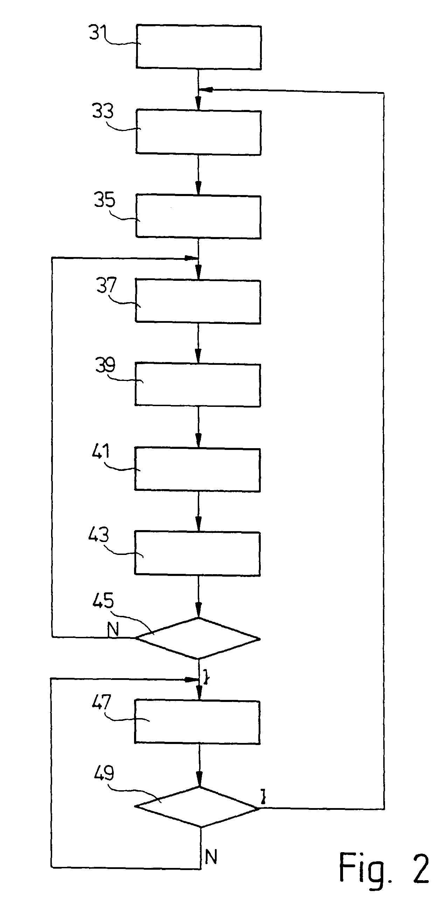

Anhand des in Figur 2 wiedergebenden Funktionsdiagramms wird das Verfahren zum Laden eines Akkumulators näher erläutert.

Bei der Inbetriebnahme des Ladegeräts 1 in Figur 1 wird das Ladeverfahren in einem ersten Schritt Zl gestartet. Zunächst findet in einem zweiten Schritt 33, eine übliche Initialisierung statt, die dazu dient das Ladegerät in einen betriebsbereiten Zustand zuversetzen.

In einem dritten Schritt 35 wird auf geeignete Weise festgestellt, welcher Art der an die Ausgangsklemmen 13 des Ladegeräts 1 angeschlossene Akkumulator 3 ist.

In einem weiteren Schritt 37 werden die dem Ladegerät 1 zugeführten Meßwerte erfaßt und im nächsten Schritt 39 für die Auswertungslogik, die Fuzzy-Logik 21, aufbereitet.

Die aufbereiteten Meßwerte werden im nächsten Schritt 41 von der Fuzzy-Logik aufgearbeitet beziehungsweise ausgewertet und der für die Ladestromregelung erforderliche Ladestrom I berechnet. Die Steuerung des Ladevorgangs wird durch den nächsten Schritt 43 angedeutet.

Es erfolgt nun eine Abfrage 45, ob der zu ladende Akkumulator 3 voll ist oder nicht. Ist dies nicht der Fall, fällt das System zurück in den Verfahrensschritt 37, in welchem die Meßwerte erfaßt werden und nach einer Meßwertaufbereitung im Schritt 39 in der Fuzzy-Logik aufgearbeitet werden (Schritt 41). Nach dem Regelschritt 43 erfolgt wiederum die Abfrage 45, ob der Akkumulator voll ist oder nicht.

Ist schließlich der Akkumulator auf den gewünschten Ladezustand gebracht, erfolgt in einem weiteren Schritt 47 eine Erhaltungsladung.

Solange das Ladegerät 1 nicht leerläuft, wird die Erhaltungsladung aufrecht erhalten. Die Abfrage bezüglich des Leerlaufs erfolgt in dem Verfahrensschritt 49.

Wird der Akkumulator von dem Ladegerät 1 abgeklemmt, so wird dies in der Leerlaufabfrage 49 erkannt. Bei Anschluß eines neuen zu ladenden Akkumulators fällt das Verfahren zurück in den Schritt 33, der der Initialisierung des Geräts dient. Die oben beschriebenen Verfahrensschritte 35 bis 49 werden dann nacheinander durchgeführt.

Aus Figur 1 ist ersichtlich, daß die Fuzzy-Logikschaltung 21 diverse Eingangssignale verarbeitet. Beispielhaft wurden hier die Temperatur T und die Spannung U des zu ladenden Akkumulators als Eingangssignale angenommen,. darüber hinaus die Änderungen dieser Meßwerte über der Zeit.

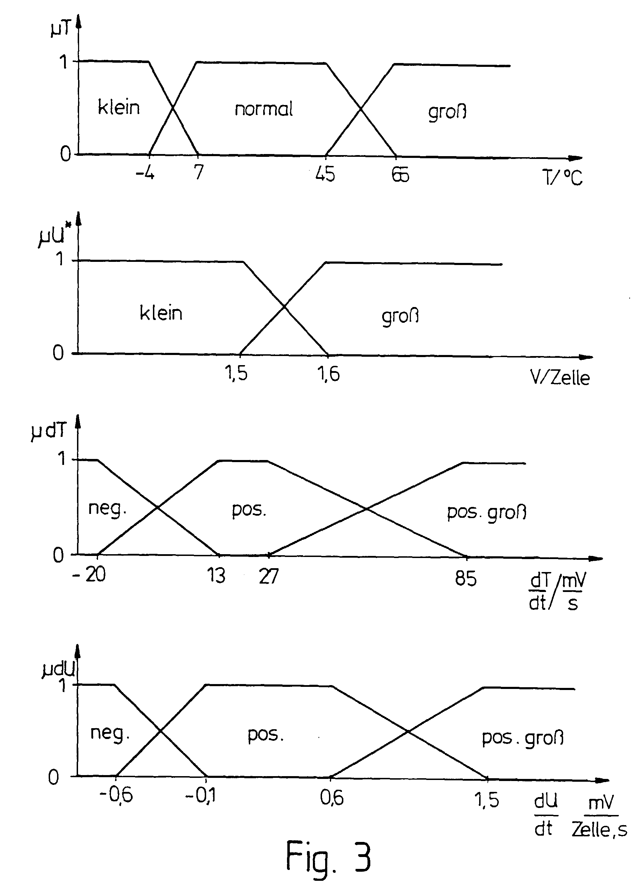

Figur 3 zeigt die sogenannten Mitgliedschaftsfunktionen dieser Eingangsgrößen. In dem obersten Diagramm ist mit µT die Akkumulatortemperatur über der Temperatur in °C.

Die Zugehörigkeit ist für verschiedene Klassen aufgezeichnet, nämlich für die Klasse "kleine Akkumulatortemperatur", "normale Akkumulatortemperatur" und "hohe beziehungsweise große Akkumulatortemperatur" eingetragen. Die Zugehörigkeit ist kontinuierlich zwischen dem Wert "0" und dem Wert "1" aufgetragen, wobei dem Wert "0" die Aussage "keine Zugehörigkeit" und dem Wert "1" die 100%-ige Zugehörigkeit zugeordnet sind.

Die Klassen sind hier so eingeteilt, daß die erste Klasse "kleine Akkumulatortemperatur" die Zugehörigkeit "1" für alle Werte unter -4 °C annimmt. Die Zugehörigkeit dieser Klasse fällt dann von dem Wert "1" bei -4 °C auf den Wert "0" bei +7 °C.

Die zweite Klasse "Akkumulatortemperatur normal" weist einen ansteigenden Zugehörigkeitsgrad von dem Wert "0" für -4 °C bis zum Wert "1" bei +7 °C auf. Die Zugehörigkeit behält den Wert "1" bis +45 °C bei und fällt dann auf den Wert "0" bei +65 °C ab.

Die dritte Klasse der Akkumulatortemperatur weist eine ansteigende Zugehörigkeit von +45 bis +65 °C auf. Die Zugehörigkeit behält den Wert "1" für alle Temperaturen oberhalb +65 °C bei.

In dem zweitobersten Diagramm gemäß Figur 3 ist die Mitgliedschaftsfunktion für die Akkumulatrospannung pro Zelle wieder gegeben. Durch die Bezeichnung µU* soll angedeutet werden, daß hier ein bewerteter Spannungswert für die Regelung des Ladevorgangs herangezogen wird.

Es wird hier von der Zugehörigkeit zu zwei Klassen ausgegangen, nämlich zu einer ersten Klasse "kleine Akkumulatorspannung" und zu einer zweiten Klasse "große Akkumulatorspannung".

Die Zugehörigkeit ist auch hier durch den Kurvenverlauf zwischen dem Wert "1" und "0" angegeben. Hundertprozentige Zugehörigkeit, das heißt, der Wert "1" ist, einer Akkumulatorspannung von ≤ 1,5 V/Zelle definiert. Die Zugehörigkeit dieser Klasse sinkt dann auf den Wert "0" für die Spannung 1,6 V pro Zelle.

Die zweite Klasse "große Akkumulatorspannung" beginnt ausgehend von dem Werten "0" bei 1,5 V/Zelle und nimmt bei 1,6 V/Zelle den Wert "1" an.

Das dritte Diagramm in Figur 3 zeigt die Änderung der Akkumulatortemperatur über der Zeit, wobei als Einheit mK/s gewählt ist.

Es sind hier drei Klassen zu unterscheiden, nämlich "negative Temperaturänderung", "positive Temperaturänderung" und "sehr große positive Temperaturänderung".

Die Zugehörigkeit der ersten Klasse "negative Temperaturänderung" hat für dT/dt = -20 mK/s den Wert "1" und fällt bis dT/dt = 13 mK/s auf den Wert "0" ab. Die Zugehörigkeit der zweiten Klasse steigt vom Wert "0" bei dT/dt = -20 mK/s auf den Wert "1" bei dT/dt = 13 mK/s an und fällt ab dT/dt = 27 mK/s auf den Wert "0" ab, der bei dT/dt = 85 mK/s erreicht wird.

Entsprechend steigt die Zugehörigkeit der dritten Klasse "sehr große positive Temperaturänderung" zwischen dT/dt = 27 mK/s und dT/dt = 85 mK/s von "0" auf den Wert "1" an.

Schließlich ist im vierten Diagramm gemäß Figur 3 die am Akkumulator liegende Spannungsänderung über der Zeit eingetragen, wobei die Änderung dU/dt die Einheit mV/Zelle,s aufweist, also in mV pro Zelle und Sekunde gemessen wird.

Die Zugehörigkeit der Spannungsänderung µdU weist auch hier drei Klassen auf, nämlich "negative Spannungsänderung", "positive Spannungsänderung" und "sehr große positive Spannungsänderung".

Die erste Klasse "negative Spannungsänderung" hat den Wert "1" bei dU/dt = -0,6 mV/Zelle,s und fällt dann bis dU/dt = -0,1 mV/Zelle,s auf den Wert "0" ab.

Innerhalb dieses Wertebereiches steigt die Zugehörigkeit der zweiten Klasse von dem Wert "0" auf den Wert "1" an, um dann zwischen den Werten 0,6 und 1,5 mV/Zelle,s auf den Wert "0" abzufallen.

Entsprechend ist ein Anstieg der Zugehörigkeit von dem Wert "0" auf den Wert "1" in der Klasse "sehr große Spannungsänderungen" zu beobachten. Oberhalb von 1,5 mV/Zelle,s bleibt der Wert der Zugehörigkeit der dritten Klasse erhalten.

Selbstverständlich sind die Zahlenwerte für die übergangsbereiche zwischen zwei Klassen innerhalb der einzelnen Mitgliedschaftsfunktionen hier lediglich beispielhaft gewählt. Deren Festlegung kann an die zu ladenden Akkumulatoren angepaßt werden.

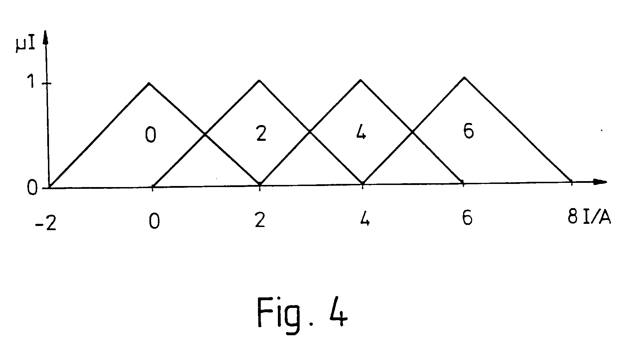

Figur 4 zeigt nun die Mitgliedschaftsfunktion der Ausgangsgröße µI, also des Ladestroms, der dem Akkumulator 3 über die Anschlußklemmen 13 in Abhängigkeit von dem auf der Steuerleitung 23 anliegenden Steuersignal vom Stromregler 11 eingespeist wird.

Für den in Ampere gemessenen Ladestrom I werden vier Klassen unterschieden, die Ladeströmen von 0A, 2A, 4A und 6A zugeordnet werden.

Die Zugehörigkeit der Klasse 0A steigt von dem Wert "0" auf den Wert "1" zwischen -2A und 0A, um dann zwischen 0A und +2A wiederum den Wert "0" anzunehmen.

Die Zugehörigkeit der Klasse 2A geht aus von dem Wert "0" bei 0A, erreicht den Wert "1" bei +2A und fällt dann wiederum auf den Wert "0" ab, der bei 4A erreicht wird.

Der Zugehörigkeitsgrad der Klasse 4A steigt zwischen +2A und 4A von "0" auf "1" unf fällt dann wiederum auf den Wert "0" ab, der bei 6A erreicht ist.

Schließlich ist für die Klasse 6A zwischen 4A und 6A ein Anstieg des Zugehörigkeitsgrads von "0" auf "1" festzustellen und anschließend ein Abfall auf den Wert "0" bei 8A.

Die mit Hilfe des Ladegerätes gemäß Figur 1 beziehungsweise der Mitgliedschaftsfunktionen realisierbaren Ladeströme ergeben sich aus der Auswertung der Eingangsgrößen, wie sie in Figur 3 wiedergeben sind. Aus der folgenden Tabelle ist der dabei feststellbare Regelsatz ablesbar, aus dem sich die Ladeströme für die verschiedenen Lade- beziehungsweise Temperaturzustände eines Akkumulators ablesen lassen. Mit x sind in der folgenden Tabelle die Meßwerte gekennzeichnet, die ohne Gewichtung bleiben.

Geht man beispielsweise in der Tabelle auf die erste Zeile des Regelsatzes ein, so ergibt sich daraus, daß der Ladestrom I den Wert 0A annimmt, wenn die gewichtete Akkumulatorspannung pro Zelle groß ist. Dabei spielen weder die Temperatur noch deren zeitliche Änderung noch die Änderung der Akkumulatorspannung pro Zeit eine Rolle.

Andere -mit x gekennzeichnete- Spannungszustände des Akkumulators bleiben ohne Berücksichtigung. Es wirken sich in diesem Fall nur die übrigen Eingangsgrößen auf die Einstellung des Ladestroms aus. Es ist allerdings auch ersichtlich, daß bei einer kleinen Temperatur des Akkumulators sowohl bei einer negativen als auch bei einer positiven Temperaturänderung die Spannungsänderung am Akkumulator unberücksichtigt bleibt. Im ersten Fall, bei einer negativen Temperaturänderung, stellt sich ein Ladestrom von I = 4A, bei einer positiven Temperaturänderung des Akkumulatros ein Ladestrom von I = 6A.

Dem Regelsatz ist überdies zu entnehmen, daß bei einer hohen Temperatur des Akkumulators die Spannungsänderung dU ebenfalls ohne Einfluß bleibt. Je nach dem, ob die Temperaturänderung des Akkumulators negativ, positiv oder sehr stark positiv ist, stellt sich ein Ladestrom von 2A, 0A und 0A ein.

In den übrigen Fällen gehen die Temperatur, die Änderung der Spannung pro Zeit und die Änderung der Temperatur über der Zeit in die Einstellung des Ladestroms I ein. Die jeweiligen Werte lassen sich aus der nachfolgenden Tabelle ablesen.

| U* | T | dU | T | I |
|---|---|---|---|---|
| groß | x | x | x | 0 |
| x | klein | x | negativ | 4 |
| x | klein | x | positiv | 6 |
| x | klein | negativ | pos.groß | 0 |
| x | normal | positiv | negativ | 6 |
| x | normal | positiv | positiv | 6 |
| x | normal | positiv | pos.groß | 4 |
| x | normal | pos.groß | negativ | 6 |
| x | normal | pos.groß | positiv | 6 |
| x | normal | pos.groß | pos.groß | 4 |
| x | normal | negativ | negativ | 6 |
| x | normal | negativ | positiv | 0 |
| x | normal | negativ | pos.groß | 0 |
| x | groß | x | negativ | 2 |
| x | groß | x | positiv | 0 |
| x | groß | x | pos.groß | 0 |

Durch den Einsatz der Fuzzy-Logik ist es möglich, die Spannung und die Temperatur sowie die zeitlichen Ableitungen dieser Werte an einem Akkumulator während eines Ladevorgangs zu erfassen. Dabei ist eine Verknüpfung mit den Begriffen "Spannung hoch", "Spannung niedrig", "Spannung steigt" oder "Spannung fällt" möglich, wobei die Begriffe "Temperatur hoch", "Temperatur niedrig", "Temperatur steigt" oder "Temperatur fällt" ebenfalls mit den genannten Begriffen verknüpft werden können. Auf jeden Fall ist sichergestellt, daß unter unterschiedlichen Bedingungen immer ein optimaler Ladestrom eingestellt wird, so daß eine schonende Ladung von Akkumulatoren realisierbar ist und eine besonders lange Lebensdauer der einzelnen Zellen des Akkumulators sichergestellt ist.

Vorzugsweise können bei der Einstellung des Laderaums die Regelwerte von Temperatur und Spannung eines Akkumulators -und auch die Ableitungen nach der Zeit- über mehrere Meßzyklen gemittelt werden, um einen möglichst gleichmäßigen und damit schonenden Ladevorgang zu gewährleisten.

Durch die Erfassung der verschiedenen Randbedingungen kann auch bei einer starken Verkürzung der Ladezeit auf 15 oder gar 5 Minuten eine Schonung der Akkumulatoren eingehalten werden.

Aus dem oben Gesagten ergibt sich ohne weiteres, daß sowohl das Verfahren als auch das erläuterte Ladegerät sehr wohl geeignet sind, bei Ladeverfahren von NiCad- oder NiH-Zellen aufweisenden Akkumulatoren eingesetzt zu werden.

## Patentansprüche

1. Verfahren zum Laden eines Akkumulators (3), wobei eine Logikschaltung (19) die Temperatur des Akkumulators (3) als Eingangsgröße (T) für die Steuerung des Ladestromes erfaßt und den Ladevorgang bei Erreichen einer vorgegebenen Akkumulatorspannung abschaltet, dadurch gekennzeichnet,
- daß die Logikschaltung (19) zunächst die Art des angeschlossenen Akkumulators (3) erfaßt,
- daß als weitere Eingangsgröße die Spannung (U) und die zeitlichen Änderungen von Temperatur und Spannung (dT/dt, dU/dt) ermittelt werden,
- daß für jeden der ermittelten Eingangsgrößen (T, U, dT/dt, dU/dt) mehrere sich im Grenzbereich überschneidende Klassen (klein, normal, groß, neg., pos., pos. groß) gebildet werden,
- daß alle Klassen (Klein, normal, groß, neg., pos., pos. groß), in die die gemessenen Werte der Eingangsgrößen fallen, nach Art der Fuzzy-Logik zu Mitgliedschaftsfunktionen verknüpft werden und
- daß ein der Mitgliedschaftsfunktion entsprechender, vorgegebener Stromwert zur Einstellung des Ladestromes (I) gebildet wird.

2. Verfahren nach Anspruch 1, dadurch gekennzeichnet, daß die Klassen "Spannung hoch", "Spannung niedrig", "Spannung steigt" oder "Spannung fällt" unterschieden werden und der Ladevorgang entsprechend gesteuert wird.

3. Verfahren nach einem der Ansprüche 1 oder 2, dadurch gekennzeichnet, daß die Klassen "Temperatur des Akkumulators hoch", "Temperatur des Akkumulators niedrig", "Temperatur des Akkumulators steigt" und "Temperatur des Akkumulators fällt" unterschieden werden.

4. Verfahren nach einem der Ansprüche 1 bis 3, dadurch gekennzeichnet, daß die momentane Spannung oder die Temperatur des Akkumulators über mehrere Messungen erfaßt und vorzugsweise gemittelt werden.

5. Ladegerät für Akkumulatoren (3) zur Durchführung des Verfahrens nach einem der vorherigen Ansprüche, mit Mitteln zur Ermittlung der momentanen Spannung (U), der Temperatur (T) der Akkumulatoren und des zeitlichen Änderungen der Temperatur und der Spannung (dT/dt, dU/dt), und mit einem den Ladevorgang beeinflussenden Steuergerät (1), dadurch gekennzeichnet,
- daß das Steuergerät (1) Mittel zur Erfassung des Art des angeschlossenen Akkumulators (3) enthält,
- daß das Steuergerät (1) einen Fuzzy-Prozessor (19, 21) aufweist und
- daß der Fuzzy-Prozessor (19, 21) so ausgebildet ist, aus den Klassen (klein, normal, groß, neg., pos., pos. groß), in die die ermittelten Eingangsgrößen (T, dT, U, dU/dt) fallen, ein Steuersignal für den Ladestrom (I) zu bilden.

6. Ladegerät nach Anspruch 5, dadurch gekennzeichnet, daß im Steuergerät (I) die der Spannung (U) und der Temperatur (T) sowie deren Ableitungen nach der Zeit zugeordneten Signale miteinander verknüpfbar sind.

7. Ladegerät nach Anspruch 5 oder 6, dadurch gekennzeichnet, daß Spannung (U) und Temperatur (T) in mehreren aufeinanderfolgenden Messungen erfaßbar und vorzugsweise mittelbar sind.

8. Verwendung eines Ladegeräts nach einem der vorhergehenden Ansprüche zum Laden von NiCad- und/oder NiH-Akkumulatoren.

## Claims

1. Method for charging an accumulator (3), a logic circuit (19) detecting the temperature of the accumulator (3) as an input quantity (T) for controlling the charging current, and turning off the charging process when a predetermined accumulator voltage is reached, characterized in that
- the logic circuit (19) first detects the type of accumulator (3) connected,
- the voltage (U) and the time variations of temperature and voltage (dT/dt, dU/dt) are determined as further input quantities,
- a plurality of classes (small, normal, large, neg., pos., large pos.) that overlap in the boundary region are formed for each of the determined input quantities (T, U, dT/dt, dU/dt),
- all classes (small, normal, large, neg., pos., large pos.) into which the measured values of the input quantities fall, are linked in fuzzy-logic fashion to form membership functions,
- a predetermined current value, corresponding to the membership function, is formed in order to set the charging current (I).

2. Method according to Claim 1, characterized in that the classes "high voltage", "low voltage", "increasing voltage" or "decreasing voltage" are discriminated and the charging process is controlled accordingly.

3. Method according to either of Claims 1 or 2, characterized in that the classes "high accumulator temperature", "low accumulator temperature", "increasing accumulator temperature" and "decreasing accumulator temperature" are discriminated.

4. Method according to one of Claims 1 to 3, characterized in that the instantaneous voltage or the temperature of the accumulator are detected over a plurality of measurements and preferably averaged.

5. Charger for accumulators (3), for carrying out the method according to one of the preceding claims, having means for determining the instantaneous voltage (U), the temperature (T) of the accumulators and the time variations of the temperature and of the voltage (dT/dt, dU/dt), and having a control device (1) which influences the charging process, characterized in that
- the control device (1) contains means for detecting the type of accumulator (3) connected,
- the control device (1) has a fuzzy processor (19, 21), and
- the fuzzy processor (19, 21) is designed in such a way as to form a control signal for the charging current (I) from the classes (small, normal, large, neg., pos., large pos.) into which the determined input quantities (T, dT, U, dU/dt) fall.

6. Charger according to Claim 5, characterized in that the signals assigned to the voltage (U) and to the temperature (T) as well as to the time derivatives thereof are linked to each other in the control device (I).

7. Charger according to Claim 5 or 6, characterized in that voltage (U) and temperature (T) can be detected in a plurality of sequential measurements and can preferably be averaged.

8. Use of a charger according to one of the preceding claims, for the charging of NiCad and/or NiH accumulators.

## Revendications

1. Procédé de charge d'un accumulateur (3) avec un circuit logique (19) qui détecte la température de l'accumulateur (3) comme grandeur d'entrée (T) pour commander le courant de charge et coupe l'opération de charge lorsqu'on atteint une tension prédéterminée aux bornes de l'accumulateur, procédé caractérisé en ce que :
- le circuit logique (19) détecte tout d'abord le type d'accumulateur (3) à charger,
- comme autre grandeur d'entrée on détermine la tension (U) et les variations en fonction du temps, de la température et de la tension (dT/dt, dU/dt),
- pour chacune des grandeurs d'entrée obtenues (T, U, dT/dt, dU/dt) on forme plusieurs classes qui se chevauchent à leurs limites (petit, normal, grand, négatif, positif, positif grand),
- toutes les classes (petit, normal, grand, négatif, positif, positif grand) dans lesquelles tombent les valeurs mesurées des grandeurs d'entrée sont combinées en des fonctions associées en logique floue et
- on fixe une intensité prédéterminée correspondant à la fonction d'association pour régler le courant de charge (I).

2. Procédé selon la revendication 1, caractérisé en ce qu'on distingue entre les classes « tension élevée » « tension faible » « tension croissante » ou « tension décroissante » et on commande de manière correspondante l'opération de charge.

3. Procédé selon l'une des revendications 1 ou 2, caractérisé en ce qu'on distingue entre les classes « température de l'accumulateur élevée » « température de l'accumulateur faible » « température de l'accumulateur croissante » et « température de l'accumulateur décroissante ».

4. Procédé selon l'une des revendications 1 à 3, caractérisé en ce qu'on détecte la tension instantanée ou la température de l'accumulateur par plusieurs mesures et on forme de préférence une moyenne.

5. Chargeur d'accumulateur (3) pour la mise en oeuvre du procédé selon l'une des revendications précédentes, comprenant des moyens pour déterminer la tension instantanée (U), la température (T) des accumulateurs et les dérivés en fonction du temps, de la température et de la tension (dT/dt, dU/dt) et un appareil de commande (1) influençant l'opération de charge, caractérisé en ce que :
- l'appareil de commande (1) comporte des moyens pour déterminer le type de l'accumulateur (3) à charger,
- l'appareil de commande (1) comprend un processeur en logique floue (19, 21),
- le processeur en logique floue (19, 21) est réalisé pour former un signal de commande du courant de charge (I) à partir des classes (faible, normal, grand, négatif, positif, grandement positif) dans lesquelles tombent les différentes grandeurs d'entrée (T, dT, U, dU/dt).

6. Chargeur selon la revendication 5, caractérisé en ce que dans l'appareil de commande (I) on combine les signaux associés à la tension et à la température (T) ainsi qu'à la dérivée de ces grandeurs en fonction du temps.

7. Chargeur selon la revendication 5 ou 6, caractérisé en ce que la tension (U) et la température (T) sont détectées par plusieurs mesures successives et sont de préférence prises en moyenne.

8. Application d'un chargeur selon l'une des revendications précédentes pour charger les accumulateurs NiCad- et/ou NiH.
